# EUROPÄISCHE PATENTSCHRIFT

(11) **EP 3 870 788 B1**
(45) Veröffentlichungstag und Bekanntmachung des Hinweises auf die Patenterteilung: **13.03.2024**
(21) Anmeldenummer: 19816568.0
(22) Anmeldetag: 29.11.2019
(51) Int. Cl.: E05F 11/48, E05F 15/689

(54) **FENSTERHEBERSYSTEM UND KRAFTFAHRZEUGTÜR**
WINDOW LIFT SYSTEM AND MOTOR VEHICLE DOOR
SYSTÈME DE LÈVE-VITRE ET PORTIÈRE DE VÉHICULE AUTOMOBILE

(30) Priorität: 30.11.2018 DE 102018220656
(43) Veröffentlichungstag der Anmeldung: 01.09.2021
(73) Patentinhaber: Brose Fahrzeugteile SE & Co. Kommanditgesellschaft, Bamberg, 96052 Bamberg (DE)
(72) Erfinder: TRAUTMANN, Michael, 95512 Neudrossenfeld (DE); HÜMMER, Norman, 96250 Ebensfeld (DE); JAHN, Michael, 96148 Baunach (DE)
(74) Vertreter: Isarpatent
(86) Internationale Anmeldenummer: PCT/EP2019/083064
(87) Internationale Veröffentlichungsnummer: WO 2020/109539

(56) Entgegenhaltungen:
- EP-A2- 2 050 909
- DE-A1-102009 033 466

## Beschreibung

### GEBIET DER ERFINDUNG

Die vorliegende Erfindung betrifft ein Fensterhebersystem und eine Kraftfahrzeugtür.

### TECHNISCHER HINTERGRUND

Fensterhebersysteme für Fahrzeuge dienen dem Bewegen einer in einer Fahrzeugtür geführten Fensterscheibe. Hierzu sind üblicherweise zwei parallele Führungsschienen vorgesehen, an welchen jeweils ein mittels eines Seilantriebs verfahrbarer Mitnehmer geführt ist, wobei die Fensterscheibe an den Mitnehmer gekoppelt ist.

In Kraftfahrzeugen werden Fahrer- oder eine Beifahrertüren typischerweise zwischen einer so genannten A-Säule und einer so genannten B-Säule des Fahrzeugs angeordnet. Eine Fensteröffnung der Tür ist hierbei zumeist durch eine an der A-Säule gelegene, geneigte vordere Strebe und eine an der B-Säule gelegene hintere Strebe begrenzt. Die Fensterscheibe ist mittels eines Fensterhebersystems zwischen einer Schließstellung, in welcher die Scheibe die Fensteröffnung abdeckt, und einer Öffnungsstellung, in welcher die Scheibe die Fensteröffnung zumindest teilweise freigibt bewegbar. Üblicherweise wird die Fensterscheibe entlang der hinteren Strebe zwischen Dichtlippen oder dergleichen über die gesamte Bewegungsbahn zwischen der Öffnungs- und der Schließstellung geführt, während die Fensterscheibe an der vorderen Strebe aufgrund deren Neigung lediglich über einen kleinen Teil der Bewegungsbahn geführt ist. Die auf die Fensterscheibe wirkenden Reibungskräfte sind deshalb im Bereich der hinteren Strebe größer.

Fensterhebersysteme sind deshalb häufig so aufgebaut, dass eine Zugkraft zum Bewegen der Fensterscheibe in die Schließstellung über ein direkt von einem Seilantrieb angetriebenes Seil auf ein hinteres Gleitstück aufgebracht wird, welches an einer im Bereich der hinteren Strebe angeordneten Führungsschiene geführt ist. Ein vorderes Gleitstück, das an einer im Bereich der vorderen Strebe angeordneten Führungsschiene geführt ist, wird zur Aufbringung einer Zugkraft mittels des Seils an das hintere Gleitstück gekoppelt. Ein solches System ist Beispielsweise in dem Deutschen Gebrauchsmuster DE 20 2008 016 221 U1 beschrieben.

In dem Europäischen Patent EP 1 778 942 B1 ist beschrieben, die Zugkraft von dem Seilantrieb auf das an der vorderen Strebe angeordnete Gleitstück aufzubringen.

Um eine definierte Stellung der Gleitstücke in der Schließstellung der Fensterscheibe sicherzustellen, können an den Führungsschienen Anschläge vorgesehen sein. Die Deutsche Patentanmeldung DE 10 2009 033 466 A1 beschreibt ein Fensterhebersystem mit einem Gleitstück, das einen einstellbaren Abschnitt aufweist, um eine parallele Ausrichtung Gleitstücke entlang von Führungsschienen zu erzielen. Zur Justierung des Systems werden die Gleitstücke nacheinander an die Anschläge in Anlage gebracht.

Die Europäische Patentanmeldung EP 2 050 909 A2 beschreibt ferner ein Fensterhebersystem mit zwei parallelen Führungsschienen, an denen jeweils im oberen Endbereich ein Anschlag vorgesehen ist. Das Fensterhebersystem umfasst ferner Mitnehmer, die an den Führungsschienen geführt sind und eine Fensterscheibe halten. Beim Anheben der Fensterscheibe fahren beide Mitnehmer gegen die Anschläge.

Da Fensterhebersysteme in Kraftfahrzeugtüren häufig hohen Temperaturschwankungen ausgesetzt sind und weiterhin beim Bewegen der Fensterscheibe hohe Kräfte auf den Seilantrieb wirken, kann es im Laufe der Zeit zu einer Seilsetzung oder ähnlichen Erscheinungen kommen, welche die Positionierbarkeit der Gleitstücke bzw. Mitnehmer an der jeweiligen Führungsschiene beeinträchtigen. Dies kann dazu führen, dass die Gleitstücke nicht mehr bis an die Anschläge gefahren werden können und damit die Fensterscheibe nicht mehr zuverlässig in die Schließstellung gebracht wird.

### ZUSAMMENFASSUNG DER ERFINDUNG

Vor diesem Hintergrund liegt der vorliegenden Erfindung die Aufgabe zugrunde, ein verbessertes Fensterheberkonzept für ein Kraftfahrzeug bereitzustellen.

Erfindungsgemäß wird diese Aufgabe jeweils durch die Gegenstände der unabhängigen Ansprüche gelöst.

Gemäß einem ersten Aspekt der Erfindung ist ein Fensterhebersystem für ein Kraftfahrzeug vorgesehen. Das Fensterhebersystem umfasst eine erste Führungsschiene, welche in einem oberen Endbereich einen ersten Anschlag aufweist, eine zweite Führungsschiene, welche in einem oberen Endbereich einen zweiten Anschlag aufweist, ein an der ersten Führungsschiene geführtes erstes Gleitstück, ein an der zweiten Führungsschiene geführtes zweites Gleitstück, eine Seiltrommel und ein mittels der Seiltrommel antreibbares und an die Gleitstücke gekoppeltes Antriebsseil, welches zwischen dem oberen Endbereich der zweiten Führungsschiene und einem unteren Endbereich der ersten Führungsschiene in einer Bowdenzughülle geführt ist. Die Gleitstücke sind durch das Antriebsseil entlang der Führungsschienen in eine Anschlagposition bewegbar, in welcher das zweite Gleitstück an dem zweiten Anschlag anliegt und das erste Gleitstück in einem vorbestimmten Abstand zu dem ersten Anschlag positioniert bzw. angeordnet ist, wobei der vorbestimmte Abstand in einem Bereich zwischen 0,4 Prozent und 1,2 Prozent einer Länge der Bowdenzughülle liegt.

Gemäß einem weiteren Aspekt der Erfindung ist eine Kraftfahrzeugtür vorgesehen. Die Kraftfahrzeugtür weist einen Rahmen auf, welcher eine Fensteröffnung definiert, wobei die Fensteröffnung in Bezug auf eine Türlängsrichtung durch eine erste Strebe und eine beabstandet zu dieser angeordnete zweite Strebe begrenzt ist. Weiterhin umfasst die Kraftfahrzeugtür ein Fensterhebersystem gemäß dem ersten Aspekt der Erfindung, wobei die erste Schiene in Bezug auf die Türlängsrichtung im Bereich der ersten Strebe und die zweite Führungsschiene im Bereich der zweiten Strebe angeordnet ist. Die Kraftfahrzeugtür weist ferner eine an die Gleitstücke des Fensterhebersystems gekoppelte Fensterscheibe auf, welche eine entlang der zweiten Strebe geführte Hinterkante und eine schräg zu der Hinterkante verlaufende Vorderkante aufweist. Die Fensterscheibe ist mittels der Gleitstücke in eine Schließposition bewegbar, in welcher die Fensterscheibe die Fensteröffnung abdeckt, wobei die Gleitstücke in der Schließposition der Fensterscheibe in der Anschlagposition angeordnet sind.

Eine der vorliegenden Erfindung zugrunde liegende Idee besteht darin, lediglich eines von zwei an vorzugsweise parallelen Führungsschienen geführten Gleitstücken eines Fensterhebersystems gegen einen Anschlag fahren zu lassen, wenn eine mittels der Gleitstücke bewegbare Fensterscheibe in eine Schließposition bewegt wird. Insbesondere kann die Seillänge eines Seilabschnitts des Antriebsseils, an welches das erste Gleitstück, das in der Anschlagposition der Gleitstücke beabstandet zu dem jeweiligen Anschlag angeordnet sein soll, entsprechend ausgelegt sein. Erfindungsgemäß soll der vorbestimmte Abstand, in welchem das erste Gleitstück zu dem ersten Anschlag in der Anschlagposition angeordnet ist, in einem Bereich zwischen 0,4 Prozent und 1,2 Prozent einer Länge der Bowdenzughülle betragen, in welcher das Antriebsseil zwischen den Führungsschienen geführt ist. Es hat sich überraschend gezeigt, dass in diesem Abstandsbereich auch bei sehr langen Bowdenzughüllen, z.B. bei Bowdenzughüllen mit einer Länge zwischen 700 mm und 800 mm, ein zuverlässiges Bewegen der Fensterscheibe in deren Schließposition erfolgt, und zwar unabhängig von den äußeren Bedingungen, wie Temperatur, Feuchtigkeit und dergleichen.

Eine weitere der Erfindung zugrunde liegende Idee besteht darin, die erste Schiene mit dem ersten Gleitstück, welches in der Anschlagposition, wie beschrieben, beabstandet zu dem ersten Anschlag angeordnet ist, im Bereich einer vorderen, geneigten Strebe einer Tür anzuordnen. Insbesondere ist mittels des Seilantriebs bzw. der Seiltrommel über einen ersten Seilabschnitt eine Zugkraft direkt auf das erste Gleitstück aufbringbar und mittels eines zweiten Seilabschnitts, welcher teilweise in der Bowdenzughülle geführt ist, wird die auf das erste Gleitstück aufgebrachte Zugkraft derart auf das zweite Gleitstück übertragen, dass beide Gleitstücke entlang der gleichen Richtung bewegt werden. Da die Fensterscheibe im Bereich der zweiten Strebe an der Hinterkante geführt ist, muss durch das zweite Gleitstück eine größere Kraft überwunden werden, als durch das erste Gleitstück. Es ist deshalb besonders vorteilhaft, das erste Gleitstück in der Anschlagposition in dem o.g. Abstand zu dem Anschlag zu positionieren, da auf diese Weise sichergestellt wird, dass auch im Falle einer Setzung der Bowdenzughülle stets noch Kraft auf das zweite Gleitstück übertragen werden kann.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform des Fensterhebersystems ist der vorbestimmte Abstand größer 3 mm und kleiner oder gleich 8 mm. In diesem Bereich wird insbesondere für Bowdenzughüllen mit einer Länge in einem Bereich von 700 mm bis 800 mm eine sichere Reserve für Setzungen bzw. Längenänderungen der Bowdenzughülle vorgesehen.

Gemäß einer weiteren Ausführungsform ist vorgesehen, dass der vorbestimmte Abstand größer 3 mm und kleiner oder gleich 6 mm ist. Ein besonderer Vorteil dieses Abstandsbereichs liegt darin, dass trotz ausreichend großer Reserve für Setzungen bzw. Längenänderungen der Bowdenzughülle eine Verkippung der Fensterscheibe infolge der bezüglich der Längserstreckung der Führungsschienen unterschiedlichen Position der Gleitstücke klein gehalten wird.

Gemäß einer weiteren Ausführungsform des Fensterhebersystems ist der erste Anschlag einstückig mit der ersten Führungsschiene ausgebildet.

Gemäß einer weiteren Ausführungsform ist der zweite Anschlag einstückig mit der zweiten Führungsschiene ausgebildet.

Die einteilige Ausbildung des Anschlags mit der jeweiligen Führungsschiene bietet den Vorteil, dass Anzahl der Einzelteile des Fensterhebersystems verringert wird. Dies erleichtert z.B. die Montage des Systems.

Bei dem erfindungsgemäßen Fensterhebersystem ist ferner vorgesehen, dass ein erster Seilabschnitt des Antriebsseils an das erste Gleitstück gekoppelt ist, über einen im oberen Endbereich der ersten Führungsschiene angeordneten oberen ersten Seilumlenker zu der Seiltrommel und von dieser über einen in einem unteren Endbereich der zweiten Führungsschiene angeordneten unteren zweiten Seilumlenker zu dem zweiten Gleitstück geführt ist und an das zweite Gleitstück gekoppelt ist, wobei ein zweiter Seilabschnitt des Antriebsseils an das zweite Gleitstück gekoppelt ist, über einen im oberen Endbereich der zweiten Führungsschiene angeordneten oberen zweiten Seilumlenker und über einen im unteren Endbereich der ersten Führungsschiene angeordneten unteren ersten Seilumlenker zu dem ersten Gleitstück geführt ist und an das erste Gleitstück gekoppelt ist. Auf diese Weise wird eine effiziente Übertragung der durch die Seiltrommel auf den ersten Seilabschnitt aufgebrachten Zugkraft über das erste Gleitstück auf das zweite Gleitstück erzielt.

Einer oder mehrere der Seilumlenker können insbesondere als Umlenkrollen ausgebildet sein. Dies bietet den Vorteil, dass die Seilreibung an den Umlenkstellen verringert wird.

Gemäß einer Ausführungsform der Tür ist die Fensterscheibe an der Hinterkante durch eine Führungsstruktur entlang der zweiten Strebe geführt. Die Führungsstruktur kann beispielsweise durch einander gegenüberliegende Lippen gebildet sein, welche einen Führungsschlitz definieren, in den die Hinterkante der Scheibe eingeschoben ist. Die Scheibe liegt vorzugsweise an beiden Lippen an.

Vorzugsweise erstreckt sich die Führungsstruktur parallel zu der zweiten Führungsschiene.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung einer Kraftfahrzeugtür gemäß einem Ausführungsbeispiel der vorliegenden Erfindung;
- Fig. 2: ein Fensterhebersystem gemäß einem Ausführungsbeispiel der vorliegenden Erfindung;
- Fig. 3: eine Detailansicht des in Fig. 2 dargestellten Fensterhebersystems im Bereich eines oberen Endbereichs einer ersten Führungsschiene; und
- Fig. 4: eine Detailansicht des in Fig. 2 dargestellten Fensterhebersystems im Bereich eines oberen Endbereichs einer zweiten Führungsschiene.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist -jeweils mit denselben Bezugszeichen versehen.

### BESCHREIBUNG VON AUSFÜHRUNGSBEISPIELEN

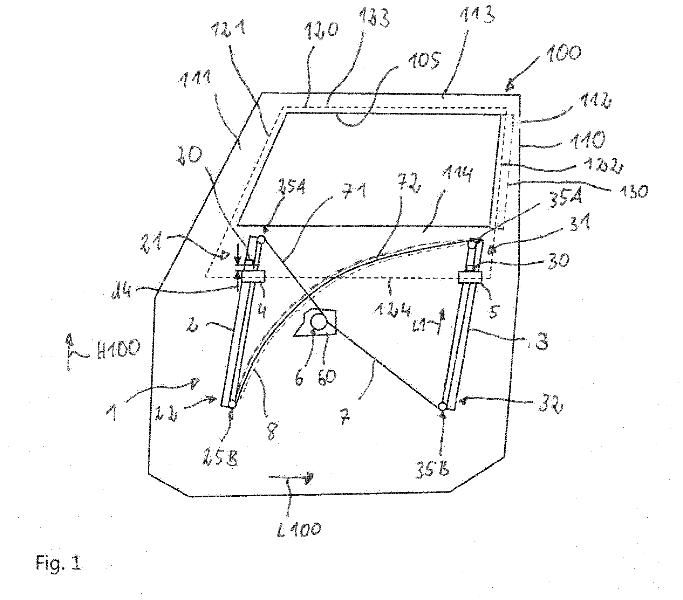

Fig. 1 zeigt beispielhaft und schematisch eine Kraftfahrzeugtür 100 für ein hier nicht dargestelltes Kraftfahrzeug. Die Kraftfahrzeugtür 100 kann beispielsweise als Fahrertür oder Beifahrertür für ein Auto vorgesehen sein. Die Kraftfahrzeugtür 100 weist einen Rahmen 110, eine Fensterscheibe 120, eine optionale Führungsstruktur 130 sowie ein Fensterhebersystem 1 auf.

Wie in Fig. 1 schematisch dargestellt, weist der Rahmen 100 eine erste Strebe 111, eine zweite Strebe 112, eine optionale Verbindungsstrebe 113 und einen optionalen Basisbereich 114 auf. Die erste und die zweite Strebe 111, 112 sind in Bezug auf eine Türlängsrichtung L100 zueinander beabstandet und ortsfest relativ zueinander angeordnet. Die erste Strebe 111 verläuft schräg bzw. angewinkelt relativ zu der zweiten Strebe 112. Die Verbindungsstrebe 113 erstreckt sich entlang der Türlängsrichtung L100 und verbindet die erste und die zweite Strebe 111, 112 in einem oberen Endbereich. Der Basisabschnitt 114 ist in Bezug auf eine sich quer zu der Türlängsrichtung L100 erstreckende Türhochrichtung H100 beabstandet zu der Verbindungsstrebe 113 angeordnet und verbindet die erste und die zweite Strebe 111, 112 in einem unteren Endbereich, der entgegengesetzt zu dem oberen Endbereich gelegen ist. Die erste Strebe 111, die zweite Strebe 112, die Verbindungsstrebe 113 und der Basisbereich 114 definieren gemeinsam eine Fensteröffnung 105. Wie in Fig. 1 erkennbar ist, ist die Fensteröffnung 105 in Bezug auf die Türlängsrichtung L100 durch eine erste Strebe 111 und die zweite Strebe 112 und in Bezug auf die Türhochrichtung H100 durch den Basisabschnitt 114 und die Verbindungsstrebe 113 begrenzt. Die Fensteröffnung 105 kann insbesondere einen polygonförmigen Umfang aufweisen, wie dies in Fig. 1 beispielhaft dargestellt ist.

Die optionale Führungsstruktur 130 ist in Fig. 1 lediglich symbolisch als Strichpunktlinie dargestellt. Wie in Fig. 1 erkennbar, ist die Führungsstruktur 130 an der zweiten Strebe 112 angeordnet und kann insbesondere durch zwei sich entlang der zweiten Strebe 112 erstreckende Lippen (nicht dargestellt) realisiert sein, welche einen Führungsschlitz definieren. Die Lippen können beispielsweise aus einem elastisch verformbaren Material, wie z.B. einem Schaumstoff oder dergleichen hergestellt sein.

Das Fensterhebersystem 1 dient zum Bewegen der Fensterscheibe 120 entlang der Türhochrichtung H100 und wird nachfolgend noch im Detail erläutert.

Die Fensterscheibe 120 weist eine flächige Erstreckung auf, die ausreicht, um die Fensteröffnung 105 des Rahmens 110 vollständig abzudecken. Insbesondere kann die Fensterscheibe 120 eine der ersten Strebe 111 zugewandte Vorderkante 121, eine der zweiten Strebe 112 zugewandte Hinterkante 122, eine die Vorderkante 121 und die Hinterkante 122 verbindende Oberkante 123, welche der Verbindungsstrebe 113 zugewandt ist, und eine in Bezug auf die Türhochrichtung H100 entgegengesetzt zu der Oberkante 123 gelegene Unterkante 124 aufweisen, welche sich ebenfalls zwischen der Vorderkante 121 und die Hinterkante 122 erstreckt, wie dies in Fig. 1 beispielhaft dargestellt ist. Wie in Fig. 1 schematisch dargestellt ist, verläuft die Vorderkante 121 schräg bzw. angewinkelt relativ zu der Hinterkante 122.

In Fig. 1 ist die Fensterscheibe 120 symbolisch als gestrichelte Linie dargestellt, wobei Fig. 1 die Anordnung der Scheibe 120 in einer Schließstellung oder Schließposition zeigt. In der Schließstellung deckt die Fensterscheibe 120 die Fensteröffnung 105 ab, insbesondere vollständig. In einer Öffnungsstellung (nicht dargestellt), gibt die Fensterscheibe 120 die Fensteröffnung 105 zumindest teilweise frei. In der Öffnungsstellung ist die Oberkante 123 der Fensterscheibe 120 in Bezug auf die Hochrichtung H100 beabstandet zu der Verbindungsstrebe 113 angeordnet bzw. ein Abstand zwischen der Oberkante 123 der Fensterscheibe 120 und dem Basisabschnitt 114 ist im Vergleich zu der Schließstellung verringert. Zur Bewegung der Fensterscheibe 120 zwischen der Öffnungs- und der Schließstellung ist die Fensterscheibe 120 an das Fensterhebersystem 1 gekoppelt, z.B. an der Unterkante 124.

Die Hinterkante 122 der Fensterscheibe 120 ist entlang der zweiten Strebe 112 geführt. Insbesondere kann die Hinterkante 122 der Fensterscheibe 120 in der Führungsstruktur 130 geführt sein, z.B. indem die Hinterkante 122 in dem zwischen den Lippen ausgebildeten Schlitz geführt ist. Optional ist die Hinterkante 122 entlang eines gesamten Stellweges, um den die Fensterscheibe 120 bei der Bewegung zwischen der Öffnungs- und der Schließstellung verfahren wird, in der Führungsstruktur 130 geführt.

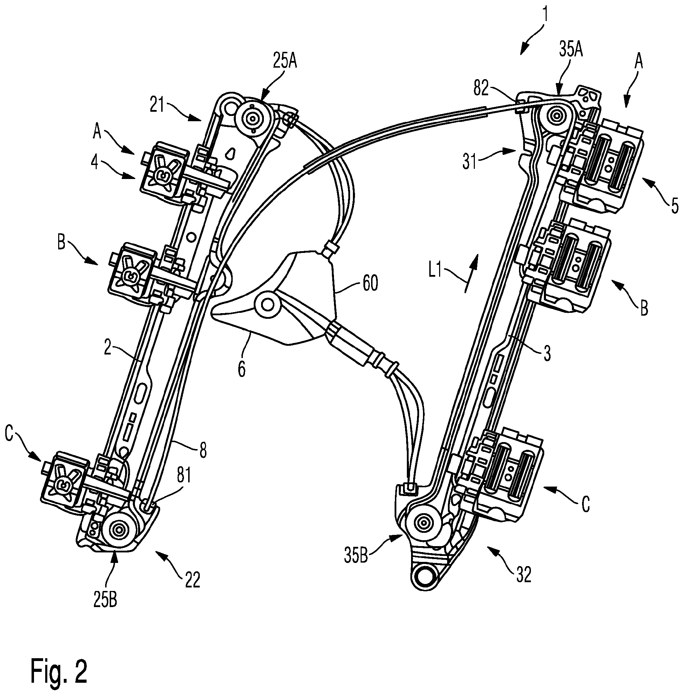

Wie in Fig. 1 schematisch dargestellt ist, weist das Fensterhebersystem 1 eine erste Führungsschiene 2, eine zweite Führungsschiene 3, ein an der ersten Führungsschiene 2 geführtes erstes Gleitstück 4, ein an der zweiten Führungsschiene 3 geführtes zweites Gleitstück 5, eine Seiltrommel 6, ein Antriebsseil 7 und eine in Fig. 1 lediglich symbolisch dargestellte Bowdenzughülle 8 auf. Fig. 2 zeigt ein Fensterhebersystem 1 unabhängig von der Kraftfahrzeugtür 100.

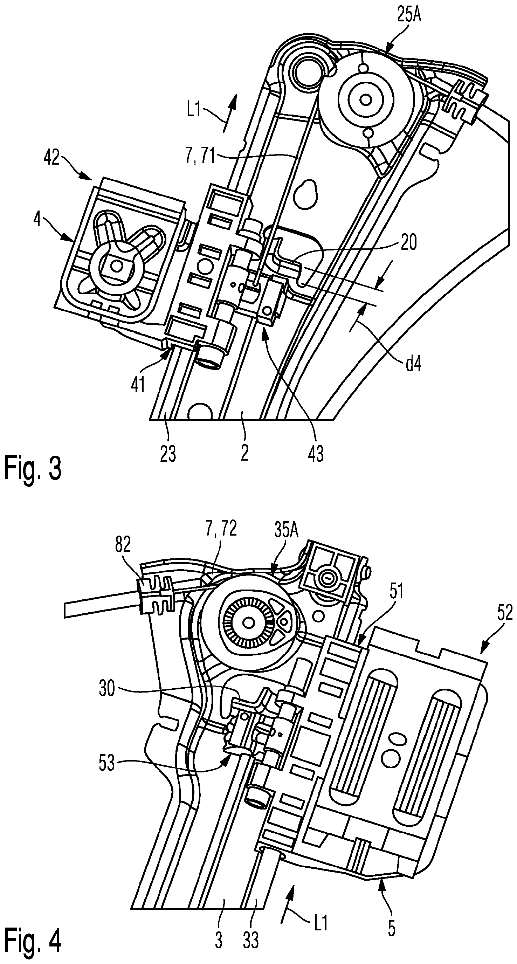

Wie insbesondere in Fig. 2 erkennbar ist, können die Führungsschienen 2, 3 als Profilschienen realisiert sein, die sich jeweils in einer Schienenlängsrichtung L1 erstrecken. Die Führungsschienen 2, 3 definieren jeweils eine sich in der Schienenlängsrichtung L1 erstreckende Führungsbahn. Die Führungsbahn kann jeweils durch einen seitlichen Profilabschnitt 23, 33 der jeweiligen Führungsschiene 2, 3 definiert sein, welcher beispielsweise einen bogenförmigen oder L-förmigen Querschnitt aufweisen kann, wie dies in den Fign. 3 und 4 beispielhaft dargestellt ist. Die Führungsschienen 2, 3 können insbesondere aus einem Metallmaterial, wie z.B. einer Aluminiumlegierung hergestellt sein.

Wie in Fig. 1 symbolisch dargestellt, weist die erste Führungsschiene 2 einen ersten Anschlag 20 auf. Der erste Anschlag 20 ist in Bezug auf die Schienenlängsrichtung L1 in einem ersten, oberen Endbereich 21 der ersten Führungsschiene 2 angeordnet. Fig. 3 zeigt beispielhaft eine Detailansicht des oberen Endbereichs 21 der ersten Führungsschiene 2. Wie in Fig. 3 erkennbar ist, kann der erste Anschlag 20 beispielsweise als eine L-förmige Ausformung der ersten Führungsschiene 2 realisiert sein. Allgemein kann der erste Anschlag 20 einstückig mit der ersten Führungsschiene 2 ausgebildet sein.

Wie in Fig. 1 weiterhin symbolisch dargestellt ist, weist die zweite Führungsschiene 3 einen zweiten Anschlag 30 auf. Der zweite Anschlag 30 ist in Bezug auf die Schienenlängsrichtung L1 in einem ersten, oberen Endbereich 31 der zweiten Führungsschiene 3 angeordnet. Fig. 4 zeigt beispielhaft eine Detailansicht des oberen Endbereichs 31 der zweiten Führungsschiene 3. Wie in Fig. 4 erkennbar ist, kann der zweite Anschlag 30 beispielsweise als eine L-förmige Ausformung der zweiten Führungsschiene 3 realisiert sein. Allgemein kann der zweite Anschlag 30 einstückig mit der zweiten Führungsschiene 3 ausgebildet sein.

Das erste Gleitstück 4 ist an der ersten Führungsschiene 2 entlang der Schienenlängsrichtung L1 geführt. Wie in Fig. 3 beispielhaft gezeigt ist, kann das erste Gleitstück 4 einen Führungsabschnitt 41, der mit der Führungsschiene 2, insbesondere mit dem Profilabschnitt 23 in Eingriff steht, aufweisen. Ferner kann ein Kopplungsabschnitt 42 zur Kopplung der Fensterscheibe 120 an das erste Gleitstück 4 und ein Zugabschnitt 43 zur Kopplung des Antriebsseils 7 an das erste Gleitstück 4 vorgesehen sein, wie dies in Fig. 3 beispielhaft dargestellt ist.

Das zweite Gleitstück 5 ist an der zweiten Führungsschiene 3 entlang der Schienenlängsrichtung L1 geführt. Wie in Fig. 4 beispielhaft gezeigt ist, kann das zweite Gleitstück 4 einen Führungsabschnitt 51, der mit der Führungsschiene 3, insbesondere mit dem Profilabschnitt 33 in Eingriff steht, aufweisen. Ferner kann ein Kopplungsabschnitt 52 zur Kopplung der Fensterscheibe 120 an das zweite Gleitstück 5 und ein Zugabschnitt 53 zur Kopplung des Antriebsseils 7 an das zweite Gleitstück 5 vorgesehen sein, wie dies in Fig. 4 beispielhaft dargestellt ist.

Wie in Fig. 2 allgemein dargestellt ist, sind die erste und die zweite Führungsschiene 2, 3 beabstandet zueinander angeordnet, wobei sich die Führungsbahn der ersten Führungsschiene 2 und die Führungsbahn der zweiten Führungschiene 3 vorzugsweise parallel zueinander erstrecken. Bei dem in Fig. 1 beispielhaft dargestellten Einbau des Fensterhebersystems 1 in eine Kraftfahrzeugtür 100, ist die erste Führungsschiene 2 im Bereich der ersten Strebe 111 und die zweite Führungsschiene 3 im Bereich der zweiten Strebe 112 angeordnet. Die Führungsschienen 2, 3 erstrecken sich weiterhin entlang der Türlängsrichtung L100, wobei der erste bzw. obere Endbereich 21 der ersten Führungsschiene 2 und der erste bzw. obere Endbereich 31 der zweiten Führungsschiene 3 jeweils der Fensteröffnung 105 zugewandt gelegen sind. Vorzugsweise erstrecken sich die zweite Führungsschiene 3 und die Führungsstruktur 130 parallel zueinander. Allgemein sind die Führungsschienen 2, 3 ortsfest relativ zu der Fensteröffnung 105 bzw. zu dem Rahmen 110 angeordnet.

Wie in Fig. 1 weiterhin schematisch dargestellt ist, ist die Fensterscheibe 120 an die Gleitstücke 4, 5 gekoppelt. Insbesondere kann die Unterkante 124 der Fensterscheibe 120 in der Kopplungsstruktur 42, 52 des jeweiligen Gleitstücks 4, 5 gehalten sein.

Die Seiltrommel 6 ist um eine Drehachse drehbar gelagert. Die Seiltrommel 6 kann beispielsweise an einer Grund- oder Basisplatte 60 drehbar gelagert sein, wie dies in den Fign. 1 und 2 beispielhaft und schematisch dargestellt ist. Die Basisplatte 60 bzw. allgemein die Drehachse der Seiltrommel 6 ist ortsfest relativ zu den Führungsschienen 2, 3 angeordnet. Zum Drehen der Seiltrommel 6 kann beispielsweise ein Elektromotor (nicht dargestellt) als Antriebseinrichtung vorgesehen sein. Alternativ ist aber auch denkbar, einen Betätigungshebel (nicht dargestellt) zur manuellen Betätigung der Seiltrommel 6 als Antriebseinrichtung vorzusehen.

Das Antriebsseil 7 ist sowohl an das erste Gleitstück 4 als auch an das zweite Gleitstück 5 gekoppelt. Dies ist in den Fign 3 und 4 im Detail dargestellt. Ein erster Seilabschnitt 71 des Antriebsseils 7 ist mit dem ersten Gleitstück 4 gekoppelt, z.B. an dem Zugabschnitt 43 des ersten Gleitstücks 4 befestigt, und ein zweiter Seilabschnitt 72 des Antriebsseils 7 ist mit dem zweiten Gleitstück 5 gekoppelt, z.B. an dem Zugabschnitt 53 des zweiten Gleitstücks 5 befestigt. Ferner ist das Antriebsseil 7 an die Seiltrommel 6 gekoppelt und damit durch die Seiltrommel 6 antreibbar. Beispielsweise kann vorgesehen sein, dass das Seil 7 die Seiltrommel 6 ein oder mehrmals umschlingt und/oder dass das Seil 7 mittels einer Klemmeinrichtung (nicht dargestellt) an der Seiltrommel 6 befestigt ist.

In den Fign. 1 und 2 ist beispielhaft eine Seilführung des Antriebsseils 7 dargestellt. Insbesondere ist vorgesehen, dass der erste Seilabschnitt 71 über einen im oberen Endbereich 21 der ersten Führungsschiene 2 angeordneten oberen ersten Seilumlenker 25A zu der Seiltrommel 6 geführt ist. Von der Seiltrommel 6, an welche der erste Seilabschnitt 71 gekoppelt ist, ist dieser über einen in einem zweiten, unteren Endbereich 32 der zweiten Führungsschiene 3 angeordneten unteren zweiten Seilumlenker 35B zu dem zweiten Gleitstück 5 geführt, an welchem der erste Seilabschnitt 71 ebenfalls befestigt ist. Der zweite, untere Endbereich 32 der zweiten Führungsschiene 3 liegt in Bezug auf die Schienenlängsrichtung L1 entgegengesetzt zu dem ersten, oberen Endabschnitt 31 der zweiten Führungsschiene 3. Der zweite Seilabschnitt 72 des Antriebsseils 7 ist über einen im oberen Endbereich 31 der zweiten Führungsschiene 3 angeordneten oberen zweiten Seilumlenker 35A und über einen in einem zweiten, unteren Endbereich 22 der ersten Führungsschiene 2 angeordneten unteren ersten Seilumlenker 25B zu dem ersten Gleitstück 4 geführt und an das erste Gleitstück 4 gekoppelt. Der zweite, untere Endbereich 22 der ersten Führungsschiene 2 ist in Bezug auf die Schienenlängsrichtung L1 entgegengesetzt zu dem ersten, oberen Endbereich 21 der ersten Führungsschiene 2 gelegen.

Wie insbesondere in Fig. 2 erkennbar ist, können die Seilumlenker 25A, 25B, 35A, 35B jeweils als Umlenkrollen ausgebildet sein. Die Umlenkrollen sind jeweils um eine Drehachse drehbar an der jeweiligen Führungsschiene 2, 3 gelagert.

Durch Drehen der Seiltrommel 6 wird der einer der Seilabschnitte 71, 72 verkürzt und der jeweils andere Seilabschnitt 72, 71 wird verlängert. Zum Bewegen der Gleitstücke 4, 5 in Richtung des Anschlags wird durch den ersten Seilabschnitt 71 eine Zugkraft auf das erste Gleitstück 4 ausgeübt. Durch die Kopplung des zweiten Seilabschnitts 72 an das erste Gleitstück 4 wird diese Zugkraft aufgrund der Seilführung über die Seilumlenker 25B, 35A als eine in Richtung des zweiten Anschlags 30 wirkende Zugkraft auf das zweite Gleitstück 5 übertragen. Folglich wird eine Zugkraft auf beide Gleitstücke 4, 5 ausgeübt und die Fensterscheibe 120 wird entlang der Führungsschienen 2, 3 verfahren. Allgemein ist das Antriebsseil somit derart geführt, dass mittels der Seiltrommel 6 über den ersten Seilabschnitt 71 eine in Richtung des ersten Anschlags 20 wirkende Zugkraft direkt auf das erste Gleitstück 4 aufbringbar ist und die Zugkraft, zumindest teilweise, über den zweiten Seilabschnitt 72 als in Richtung des zweiten Anschlags 30 wirkende Zugkraft auf das zweite Gleitstück 5 übertragen wird.

Wie in Fig. 1 symbolisch und in Fig. 2 im Detail dargestellt ist, ist der zweite Seilabschnitt 71 zwischen dem oberen Endbereich 31 der zweiten Führungsschiene 3 und dem unteren Endbereich 22 der ersten Führungsschiene 2 in einer Bowdenzughülle 8 geführt. Wie insbesondere in Fig. 2 erkennbar ist, verläuft die Bowdenzughülle 8 bogenförmig zwischen dem oberen Endbereich 31 der zweiten Führungsschiene 3 und dem unteren Endbereich 22 der ersten Führungsschiene 2. Die Bowdenzughülle 8 kann mit Endhülsen 81, 82 versehen sein, wobei eine erste Endhülse 81 an der ersten Führungsschiene 2 und eine zweite Endhülse 82 an der zweiten Führungsschiene 3 befestigt, z.B. verschraubt ist. Eine Länge der Bowdenzughülle 8 ist aufgrund des bogenförmigen Verlaufs länger als ein kürzester Abstand zwischen den Befestigungsstellen der Endhülsen 81, 82 an der jeweiligen Führungsschiene 2, 3. Eine Länge der Bowdenzughülle 8 wird somit in einem gestreckten oder abgewickelten Zustand der Bowdenzugülle 8 gemessen. Beispielsweise entspricht in Fig. 2 die Länge der Bowdenzughülle 8 der Länge des Bogens zwischen den Endhülsen 81, 82. Die Bowdenzughülle 8 kann insbesondere aus einem Kunststoffmaterial gebildet sein.

In Fig. 2 sind beispielhaft drei mögliche Positionen A, B, C der Gleitstücke 4, 5 dargestellt, in welche die Gleitstücke 4, 5 durch das Antriebsseil 7 entlang der Führungsschienen 2, 3 bewegbar sind. Position A zeigt eine Anschlagposition der Gleitstücke 4, 5, welche auch in den Fign. 1, 3 und 4 dargestellt ist. Position B zeigt eine Zwischenposition und Position C zeigt eine untere Endposition der der Gleitstücke 4, 5.

In der Anschlagposition A sind die Gleitstücke 4, 5 in Bezug auf die Schienenlängsrichtung L1 im oberen Endbereich 21, 31 der jeweiligen Führungsschiene 2, 3 angeordnet. Wie insbesondere in den Fign. 1, 3 und 4 erkennbar ist, liegt in der Anschlagposition A das zweite Gleitstück 5 an dem zweiten Anschlag 30 an und das erste Gleitstück 4 in einem vorbestimmten Abstand d4 zu dem ersten Anschlag 20 angeordnet. Wenn die Gleitstücke 4, 5 in der Anschlagposition A angeordnet sind, befindet sich die Fensterscheibe 120 in der Schließposition, wie dies schematisch in Fig. 1 dargestellt ist. Wie in den Fign. 3 und 4 beispielhaft dargestellt ist, kann jeweils der Zugabschnitt 43, 53 des jeweiligen Gleitstücks 4, 5 zur Anlage an den jeweiligen Anschlag 20, 30 vorgesehen sein. Wie in Fig. 3 dargestellt, ist der Zuganschnitt 43 des ersten Gleitstücks 4 in Bezug auf die Schienenlängsrichtung L1 in der Anschlagposition A beabstandet zu dem ersten Anschlag angeordnet. Fig. 4 zeigt weiterhin, dass das zweite Gleitstück 5 in der Anschlagposition mit dem Zugstück 53 an dem zweiten Anschlag 30 anliegt.

In der unteren Endposition C sind die Gleitstücke 4, 5 in Bezug auf die Schienenlängsrichtung L1 im unteren Endbereich 22, 32 der jeweiligen Führungsschiene 2, 3 angeordnet, wie dies in Fig. 2 beispielhaft dargestellt ist. Beispielsweise kann an den jeweiligen Führungsschienen 2, 3 zusätzlich jeweils ein unterer Anschlag (nicht dargestellt) vorgesehen sein, wobei zumindest eines der Gleitstücke 4, 5 in der unteren Endposition C an dem jeweiligen unteren Anschlag anliegt. Wenn die Gleitstücke 4, 5 in der unteren Endposition C angeordnet sind, befindet sich die Fensterscheibe 120 in einer Öffnungsposition.

In der Zwischenposition B sind die Gleitstücke 4, 5 in Bezug auf die Schienenlängsrichtung L1 zwischen dem unteren Endbereich 22, 32 und dem oberen Endbereich 21, 31 der jeweiligen Führungsschiene 2, 3 angeordnet, wie dies in Fig. 2 beispielhaft dargestellt ist. Wenn die Gleitstücke 4, 5 in der Zwischenposition B angeordnet sind, befindet sich die Fensterscheibe 120 ebenfalls in einer Öffnungsposition.

Wie bereits erläutert, ist das erste Gleitstück 4 in der Anschlagposition A in einem vorbestimmten Abstand d4 zu dem ersten Anschlag 20 angeordnet, wie dies in den Fign. 1 und 3 dargestellt ist. Diese Beabstandung stellt sicher, dass die auf das erste Gleitstück 4 ausgeübte Zugkraft durch den zweiten Seilabschnitt 72 zuverlässig auf das zweite Gleitstück 5 übertragen wird, wenn die Fensterscheibe 120 in die Schließposition bewegt wird, wie dies oben erläutert wurde. Der Abstand d4 ist vorzugsweise so gewählt, dass er in einem Bereich zwischen 0,4 Prozent und 1,2 Prozent der Länge der Bowdenzughülle 8 liegt. Dieses Verhältnis hat sich als besonders vorteilhaft erwiesen, da in diesem Bereich sichergestellt ist, dass selbst bei einer Setzung von langen Bowdenzughüllen 8 ein Anschlagen des ersten Gleitstücks 4 an den ersten Anschlag zuverlässig vermieden wird.

Konkret kann der vorbestimmte Abstand d4 größer 3 mm und kleiner oder gleich 8 mm und vorzugsweise kleiner oder gleich 6 mm sein. Im Falle einer Längenänderung der Bowdenzughülle 8 ist das erste Gleitstück 4 in der Anschlagposition A näher an dem ersten Anschlag 4 gelegen, als dies im ursprünglichen Auslegungszustand vorgesehen war. Dies führt zu einer Verkippung der Fensterscheibe 120, da die Gleitstücke 4, 5 in Bezug auf die Türhochrichtung H100 nicht mehr auf dem nach der Auslegung vorgesehenen Niveau angeordnet sind. In dem voranstehend genannten Abstandsfenster lässt sich einerseits ein großer Bereich von Längenänderungen der Bowdenzughülle 8 auf für lange Bowdenzughüllen 8 ausgleichen, wobei die resultierende Scheibenverkippung auf ein tolerierbares Maß begrenzt ist.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

### Bezugszeichenliste

- 1: Fensterhebersystem
- 2: erste Führungsschiene
- 3: zweite Führungsschiene
- 4: erstes Gleitstück
- 5: zweites Gleitstück
- 6: Seiltrommel
- 7: Antriebsseil
- 8: Bowdenzughülle

- 20: erster Anschlag
- 21: oberer Endbereich der ersten Führungsschiene
- 22: unterer Endbereich der ersten Führungsschiene
- 23: Profilabschnitt
- 25A: oberen erster Seilumlenker
- 25B: unterer erster Seilumenker
- 30: zweiter Anschlag
- 31: oberer Endbereich der zweiten Führungsschiene
- 32: unterer Endbereich der zweiten Führungsschiene
- 33: Profilabschnitt
- 35A: oberer zweiter Seilumlenker
- 35B: unterer zweiter Seilumlenker
- 41: Führungsabschnitt des ersten Gleitstücks
- 42: Kopplungsabschnitt des ersten Gleitstücks
- 43: Zugabschnitt des ersten Gleitstücks
- 51: Führungsabschnitt des zweiten Gleitstücks
- 52: Kopplungsabschnitt des zweiten Gleitstücks
- 53: Zugabschnitt des zweiten Gleitstücks
- 71: erster Seilabschnitt des Antriebsseils
- 72: zweiter Seilabschnitt des Antriebsseils
- 81: erste Endhülse
- 82: zweite Endhülse

- 100: (Kraftfahrzeug-)Tür
- 105: Fensteröffnung
- 110: Rahmen
- 111: erste Strebe
- 112: zweite Strebe
- 113: Verbindungsstrebe
- 120: Fensterscheibe
- 121: Vorderkante der Fensterscheibe
- 122: Hinterkante der Fensterscheibe
- 123: Oberkante
- 124: Unterkante
- 130: Führungsstruktur

- A: Anschlagposition
- B: Zwischenposition
- C: untere Endposition
- d4: Abstand
- L1: Schienenlängsrichtung
- L100: Türlängsrichtung
- H100: Türhochrichtung

## Patentansprüche

1. Fensterhebersystem (1) für ein Kraftfahrzeug,
mit einer ersten Führungsschiene (2), welche in einem oberen Endbereich (21) einen ersten Anschlag (20) aufweist;
mit einer zweiten Führungsschiene (3), welche in einem oberen Endbereich (31) einen zweiten Anschlag (30) aufweist;
mit einem an der ersten Führungsschiene (2) geführten ersten Gleitstück (4);
mit einem an der zweiten Führungsschiene (3) geführten zweiten Gleitstück (5);
mit einer Seiltrommel (6); und
mit einem mittels der Seiltrommel (6) antreibbaren und an die Gleitstücke (4; 5) gekoppelten Antriebsseil (7), welches zwischen dem oberen Endbereich (31) der zweiten Führungsschiene und einem unteren Endbereich (22) der ersten Führungsschiene (2) in einer Bowdenzughülle (8) geführt ist, wobei die Gleitstücke (4; 5) durch das Antriebsseil (7) entlang der Führungsschienen (2; 3) in eine Anschlagposition bewegbar sind, **dadurch gekennzeichnet,**
- **dass** ein erster Seilabschnitt (71) des Antriebsseils (7) an das erste Gleitstück (4) gekoppelt ist, über einen im oberen Endbereich (21) der ersten Führungsschiene (2) angeordneten oberen ersten Seilumlenker (25A) zu der Seiltrommel (6) und von dieser über einen in einem unteren Endbereich (32) der zweiten Führungsschiene (3) angeordneten unteren zweiten Seilumlenker (35B) zu dem zweiten Gleitstück (5) geführt ist und an das zweite Gleitstück (5) gekoppelt ist,
- **dass** ein zweiter Seilabschnitt (72) des Antriebsseils (7) an das zweite Gleitstück (5) gekoppelt ist, über einen im oberen Endbereich (31) der zweiten Führungsschiene (3) angeordneten oberen zweiten Seilumlenker (35A) und über einen im unteren Endbereich (22) der ersten Führungsschiene (2) angeordneten unteren ersten Seilumlenker (25B) zu dem ersten Gleitstück (4) geführt ist und an das erste Gleitstück (4) gekoppelt ist,
- **dass** in der Anschlagposition das zweite Gleitstück (5) an dem zweiten Anschlag (30) anliegt und das erste Gleitstück (4) in einem vorbestimmten Abstand (d4) zu dem ersten Anschlag (20) angeordnet ist und
- und **dass** der vorbestimmte Abstand (d4) in einem Bereich zwischen 0,4 Prozent und 1,2 Prozent einer Länge der Bowdenzughülle (8) liegt.

2. Fensterhebersystem nach Anspruch 1,
**dadurch gekennzeichnet,**
**dass** der vorbestimmte Abstand (d4) größer 3 mm und kleiner oder gleich 8 mm ist.

3. Fensterhebersystem nach Anspruch 2,
**dadurch gekennzeichnet,**
**dass** der vorbestimmte Abstand (d4) größer 3 mm und kleiner oder gleich 6 mm ist

4. Fensterhebersystem nach einem der voranstehenden Ansprüche,
**dadurch gekennzeichnet,**
**dass** der erste Anschlag (20) einstückig mit der ersten Führungsschiene (2) ausgebildet ist und/oder das der zweite Anschlag (30) einstückig mit der zweiten Führungsschiene (3) ausgebildet ist

5. Fensterhebersystem nach einem der voranstehenden Ansprüche,
**dadurch gekennzeichnet,**
**dass** einer oder mehrere der Seilumlenker (25A; 25B; 35A; 35B) als Umlenkrollen ausgebildet sind.

6. Kraftfahrzeugtür (100),
mit einem Rahmen (110), welcher eine Fensteröffnung (105) definiert, wobei die Fensteröffnung (105) in Bezug auf eine Türlängsrichtung (L100) durch eine erste Strebe (111) und eine beabstandet zu dieser angeordnete zweite Strebe (112) begrenzt ist;
mit einem Fensterhebersystem (1) nach einem der voranstehenden Ansprüche, wobei die erste Schiene (2) in Bezug auf die Türlängsrichtung (L100) im Bereich der ersten Strebe (111) und die zweite Führungsschiene (3) im Bereich der zweiten Strebe (112) angeordnet ist;
mit einer an die Gleitstücke (4; 5) des Fensterhebersystems (1) gekoppelten Fensterscheibe (120), welche eine entlang der zweiten Strebe (112) geführte Hinterkante (122) und eine schräg zu der Hinterkante (122) verlaufende Vorderkante (121) aufweist;
wobei die Fensterscheibe (120) mittels der Gleitstücke (4; 5) in eine Schließposition bewegbar ist, in welcher die Fensterscheibe (120) die Fensteröffnung (105) abdeckt, wobei die Gleitstücke (4; 5) in der Schließposition der Fensterscheibe (120) in der Anschlagposition angeordnet sind.

7. Kraftfahrzeugtür nach Anspruch 6,
**dadurch gekennzeichnet,**
**dass** die Fensterscheibe (120) an der Hinterkante (112) durch eine Führungsstruktur (130) entlang der zweiten Strebe (112) geführt ist.

8. Kraftfahrzeugtür nach Anspruch 7,
**dadurch gekennzeichnet,**
**dass** sich die Führungsstruktur (130) parallel zu der zweiten Führungsschiene (3) erstreckt.

## Claims

1. Window lift system (1) for a motor vehicle,
comprising a first guide rail (2) having a first stop (20) in an upper end region (21);
comprising a second guide rail (3) having a second stop (30) in an upper end region (31);
comprising a first sliding block (4) guided on the first guide rail (2);
comprising a second sliding block (5) guided on the second guide rail (3);
comprising a cable drum (6); and
comprising a drive cable (7), which can be driven by means of the cable drum (6), is coupled to the sliding blocks (4; 5), and is guided between the upper end region (31) of the second guide rail and a lower end region (22) of the first guide rail (2) in a Bowden outer tube (8),
the sliding blocks (4; 5) being movable along the guide rails (2; 3) into a stop position by way of the drive cable (7), **characterised**
- **in that** a first cable portion (71) of the drive cable (7) is coupled to the first sliding block (4), is guided via an upper first cable deflector (25A), arranged in the upper end region (21) of the first guide rail (2), to the cable drum (6) and from there via a lower second cable deflector (35B), arranged in a lower end region (32) of the second guide rail (3), to the second sliding block (5), and is coupled to the second sliding block (5),
- **in that** a second cable portion (72) of the drive cable (7) is coupled to the second sliding block (5), is guided via an upper second cable deflector (35A), arranged in the upper end region (31) of the second guide rail (3), and via a lower first cable deflector (25B), arranged in the lower end region (22) of the first guide rail (2), to the first sliding block (4), and is coupled to the first sliding block (4),
- **in that**, in the stop position, the second sliding block (5) is positioned against the second stop (30) and the first sliding block (4) is arranged at a predetermined distance (d4) from the first stop (20), and
- **in that** the predetermined distance (d4) is in a range between 0.4 percent and 1.2 percent of a length of the Bowden outer tube (8).

2. Window lift system according to claim 1,
**characterised**
**in that** the predetermined distance (d4) is greater than 3 mm and less than or equal to 8 mm.

3. Window lift system according to claim 2,
**characterised**
**in that** the predetermined distance (d4) is greater than 3 mm and less than or equal to 6 mm.

4. Window lift system according to any of the preceding claims,
**characterised**
**in that** the first stop (20) is formed integrally with the first guide rail (2) and/or in that the second stop (30) is formed integrally with the second guide rail (3).

5. Window lift system according to any of the preceding claims,
**characterised**
**in that** one or more of the cable deflectors (25A; 25B; 35A; 35B) are formed as deflection rollers.

6. Motor vehicle door (100),
comprising a frame (110) which defines a window opening (105), the window opening (105) being delimited in a door longitudinal direction (L100) by a first strut (111) and by a second strut (112) which is arranged spaced apart therefrom;
comprising a window lift system (1) according to any of the preceding claims, the first rail (2) being arranged in the region of the first strut (111) and the second guide rail (3) in the region of the second strut (112) in the door longitudinal direction (L100);
comprising a window pane (120) which is coupled to the sliding blocks (4; 5) of the window lift system (1) and which has a rear edge (122) guided along the second strut (112) and a front edge (121) extending obliquely with respect to the rear edge (122);
wherein the window pane (120) is movable by means of the sliding blocks (4; 5) into a closed position in which the window pane (120) covers the window opening (105), the sliding blocks (4; 5) being arranged in the stop position in the closed position of the window pane (120).

7. Motor vehicle door according to claim 6,
**characterised**
**in that** the window pane (120) is guided along the second strut (112) on the rear edge (112) by a guide structure (130).

8. Motor vehicle door according to claim 7,
**characterised**
**in that** the guide structure (130) extends parallel to the second guide rail (3).

## Revendications

1. Système de lève-vitre (1) pour un véhicule automobile, avec un premier rail de guidage (2) qui présente une première butée (20) dans une zone d'extrémité supérieure (21) ;
avec un deuxième rail de guidage (3) qui présente une deuxième butée (30) dans une zone d'extrémité supérieure (31) ;
avec une première pièce coulissante (4) guidée sur le premier rail de guidage (2) ;
avec une deuxième pièce coulissante (5) guidée sur le deuxième rail de guidage (3) ;
avec un tambour de câble (6) ; et
avec un câble d'entraînement (7) pouvant être entraîné au moyen du tambour de câble (6) et couplé aux pièces coulissantes (4 ; 5), lequel est guidé dans une gaine de câble Bowden (8) entre la zone d'extrémité supérieure (31) du deuxième rail de guidage et une zone d'extrémité inférieure (22) du premier rail de guidage (2),
les pièces coulissantes (4 ; 5) pouvant être déplacées par le câble d'entraînement (7) le long des rails de guidage (2 ; 3) dans une position de butée,
**caractérisé en ce**
- **qu'**un premier tronçon de câble (71) du câble d'entraînement (7) est couplé à la première pièce coulissante (4), guidé vers le tambour de câble (6) par l'intermédiaire d'un premier renvoi de câble supérieur (25A) disposé dans la zone d'extrémité supérieure (21) du premier rail de guidage (2) et de celui-ci vers la deuxième pièce coulissante (5) par l'intermédiaire d'un deuxième renvoi de câble inférieur (35B) disposé dans une zone d'extrémité inférieure (32) du deuxième rail de guidage (3) et couplé à la deuxième pièce coulissante (5),
- **qu'**un deuxième tronçon de câble (72) du câble d'entraînement (7) est couplé à la deuxième pièce coulissante (5), guidé vers la première pièce coulissante (4) par l'intermédiaire d'un deuxième renvoi de câble supérieur (35A) disposé dans la zone d'extrémité supérieure (31) du deuxième rail de guidage (3) et par l'intermédiaire d'un premier renvoi de câble inférieur (25B) disposé dans la zone d'extrémité inférieure (22) du premier rail de guidage (2) et couplé à la première pièce coulissante (4),
- **que**, dans la position de butée, la deuxième pièce coulissante (5) s'applique contre la deuxième butée (30) et la première pièce coulissante (4) est disposée à une distance prédéterminée (d4) de la première butée (20) et
- **que** la distance prédéterminée (d4) se situe dans une plage comprise entre 0,4 pour cent et 1,2 pour cent d'une longueur de la gaine de câble Bowden (8).

2. Système de lève-vitre selon la revendication 1,
**caractérisé en ce**
**que** la distance prédéterminée (d4) est supérieure à 3 mm et inférieure ou égale à 8 mm.

3. Système de lève-vitre selon la revendication 2,
**caractérisé en ce**
**que** la distance prédéterminée (d4) est supérieure à 3 mm et inférieure ou égale à 6 mm.

4. Système de lève-vitre selon l'une des revendications précédentes,
**caractérisé en ce**
**que** la première butée (20) est réalisée d'une seule pièce avec le premier rail de guidage (2) et/ou que la deuxième butée (30) est réalisée d'une seule pièce avec le deuxième rail de guidage (3).

5. Système de lève-vitre selon l'une des revendications précédentes,
**caractérisé en ce**
**qu'**un ou plusieurs des renvois de câble (25A ; 25B ; 35A ; 35B) sont réalisés sous la forme de poulies de renvoi.

6. Porte de véhicule automobile (100),
avec un cadre (110) qui définit une ouverture de fenêtre (105), l'ouverture de fenêtre (105) étant délimitée, par rapport à une direction longitudinale de porte (L100), par un premier montant (111) et un deuxième montant (112) disposé à distance du premier ;
avec un système de lève-vitre (1) selon l'une des revendications précédentes, le premier rail (2) étant disposé, par rapport à la direction longitudinale de porte (L100), dans la zone du premier montant (111) et le deuxième rail de guidage (3) dans la zone du deuxième montant (112) ;
avec une vitre (120) couplée aux pièces coulissantes (4 ; 5) du système de lève-vitre (1), qui présente un bord arrière (122) guidé le long du deuxième montant (112) et un bord avant (121) s'étendant en biais par rapport au bord arrière (122) ;
la vitre (120) pouvant être déplacée au moyen des pièces coulissantes (4 ; 5) dans une position de fermeture dans laquelle la vitre (120) recouvre l'ouverture de fenêtre (105), les pièces coulissantes (4 ; 5) étant disposées dans la position de butée dans la position de fermeture de la vitre (120).

7. Porte de véhicule automobile selon la revendication 6,
**caractérisée en ce**
**que** la vitre (120) est guidée au niveau du bord arrière (112) le long du deuxième montant (112) par une structure de guidage (130).

8. Porte de véhicule automobile selon la revendication 7,
**caractérisée en ce**
**que** la structure de guidage (130) s'étend parallèlement au deuxième rail de guidage (3).
